# EUROPEAN PATENT APPLICATION

(11) **EP 2 835 851 A1**
(43) Date of publication of application: **11.02.2015**
(21) Application number: 13772820.0
(22) Date of filing: 02.04.2013
(51) Int. Cl.: H01M 4/66, H01G 11/66, H01M 2/34, H01M 4/13

(54) **COLLECTOR, ELECTRODE STRUCTURE, NONAQUEOUS ELECTROLYTE BATTERY, AND ELECTRICITY STORAGE COMPONENT**

(30) Priority: 04.04.2012 JP 2012085698
(71) Applicant: Furukawa-Sky Aluminum Corp., Chiyoda-ku Tokyo 101-8970 (JP); UACJ Corporation, Tokyo 100-0004 (JP)
(72) Inventor: KATO, Osamu, Tokyo 100-0004 (JP); SAITO, Sohei, Tokyo 101-8970 (JP); HONKAWA, Yukiou, Tokyo 101-8970 (JP); WASAMOTO, Mitsuyuki, Kusatsu-shi Shiga 525-0042 (JP); KATAOKA, Tsugio, Kusatsu-shi Shiga 525-0042 (JP); YAMABE, Satoshi, Kusatsu-shi Shiga 525-0042 (JP)
(74) Representative: Gulde & Partner
(86) International application number: PCT/JP2013/060085
(87) International publication number: WO 2013/151046

(57) **Abstract**

A current collector, an electrode structure, a non-aqueous electrolyte battery, and an electrical storage device capable of achieving superior shut down function, are provided. According to the present invention, a current collector 1 having a resin layer 5 on at least one side of a conductive substrate 3, the resin layer 5 including a fluorine-based resin and conductive particles 11, and having a thickness of 0.3 to 20 µm, the current collector satisfying at least one of the following characteristics of (1) to (3): (1) average particle diameter of the conductive particles is 0.5 to 25 µm, and a surface occupying ratio of the conductive particles at the surface of the resin layer is 10 to 50%, (2) resistance of the surface of the resin layer at 20°C is 1.0 to 10 Ω, and resistance after heating at 220°C is 200 to 600 Ω, and (3) resistance of the surface of the resin layer at 20°C is 1.8 to 9.7 Ω, and resistance after heating at 180°C is 209 to 532 Ω, is provided.

## Description

### TECHNICAL FIELD

The present invention relates to current collectors, electrode structures, non-aqueous electrolyte batteries, and electrical storage device (electrical double layer capacitors, lithium ion capacitors, and the like) having high safety.

### BACKGROUND

Regarding lithium ion batteries in the vehicle and the like, a property (so-called a shut down function) to automatically and safely terminate discharge and charge when an accident such as malfunction occurs, has been required. In the battery, the separator is provided with such property. The separator is designed so that when it is over-heated to approximately 110 to 140 °C, the separator fuses to block micropores, thereby blocking the passage of Li ions and the like, leading to termination of electrochemical reaction in cell (shut down). However, there are cases where the shut down by the separator is incomplete and thus the temperature inside the battery further increases, or a case where an effect of the increase of the temperature outside the battery exists. In such cases, the separator may melt down and result in an internal short-circuit. Then, the shut down function can no longer be counted on, and the battery would be in an extremely dangerous condition called the thermal runaway.

In order to deal with such circumstances, a technique to form a positive temperature coefficient resistor on the current collector, has been suggested. For example, as a technique to form the positive temperature coefficient resistor on the current collector, Patent Literature 1 discloses a technique in which the surface of the current collector is coated with a conductive layer comprising a crystalline thermoplastic resin having a function as the positive temperature coefficient resistor, a conductive agent, and a binding agent. Here, the function as the positive temperature coefficient resistor is the function where the resistance value increases along with the increase in temperature. According to such technique, when the temperature inside the battery reaches the melting point of the crystalline thermoplastic resin by the heat generated due to the overcharge of the battery, the resistance of the conductive layer rises sharply, thereby cutting off the current flowing the current collectors to realize the shut down function.

### CITATION LIST

### PATENT LITERATURE

Patent Literature 1: JP 2001-357854A

### SUMMARY OF THE INVENTION

### TECHNICAL PROBLEM

The technique disclosed in Patent Literature 1 can realize the shut down function to some extent; however, it is still insufficient for practical use. Accordingly, improvement in the shut down function is desired. In addition, when the amount of conductive agent contained in the resin layer is decreased so as to improve the shut down function, the resistance of the resin layer at normal conditions would become high, thereby decreasing the so-called high rate characteristics (discharge capacity retention rate at high rate which is required for hybrid vehicles, (discharge capacity of 5mA/cm²) / (discharge capacity of 0.25mA/cm²)). That is, the shut down function and the high rate characteristics were incompatible.

The present invention has been made by taking the afore-mentioned circumstances into consideration. An object of the present invention is to provide current collectors, electrode structures, non-aqueous electrolyte batteries, and electrical storage devices having both of the shut down function with high safety and the superior high rate characteristics.

### SOLUTION TO PROBLEM

By using current collectors described hereinafter, practical non-aqueous electrolyte batteries and electrical storage devices having both of the shut down function with high safety and the superior high rate characteristics can be obtained.

That is, according to the present invention, a current collector which contains conductive particles, has a thickness of 0.3 to 20 µm, and satisfies at least one of the following (1) to (3), is provided.
(1) Average particle diameter of the conductive particles is 0.5 to 25 µm, and a surface occupying ratio of the conductive particles at a surface of the resin layer is 10 to 50%.
(2) Resistance of the surface of the resin layer at 20°C is 1.0 to 10 Ω, and resistance after heating at 220°C is 200 to 600 Ω.
(3) Resistance of the surface of the resin layer at 20°C is 1.8 to 9.7 Ω, and resistance after heating at 180°C is 209 to 532 Ω.

The present inventors have conducted extensive studies in order to satisfy both of the shut down function and superior high rate characteristics regarding the current collectors used in non-aqueous electrolyte batteries and the like, for the purpose of obtaining non-aqueous electrolyte batteries and the like having high safety. During such study, the present inventors have found that it is essential that the resin used in the resin layer is composed of a fluorine-based resin and conductive particles, and the resistance value of the resin layer is optimized, in order to achieve both of the shut down function and superior high rate characteristics. That is, the present inventors have found that current collectors capable of achieving both of the shut down function and superior high rate characteristics can be obtained only by appropriately controlling the type of the resin, formulation of the conductive particles, and the resistance value of the resin layer.

Here, when the current collector having any one of the characteristics of afore-mentioned (1) to (3) is described separately, it shall be described as follows.
(1) A current collector having a resin layer on at least one side of a conductive substrate, wherein the resin layer comprises a fluorine-based resin and conductive particles having an average particle diameter of 0.5 to 25 µm; the resin layer has a thickness of 0.3 to 20 µm; and
   a surface occupying ratio of the conductive particles at a surface of the resin layer is 10 to 50%.
(2) A current collector having a resin layer on at least one side of a conductive substrate, wherein the resin layer comprises a fluorine-based resin and conductive particles; the resin layer has a thickness of 0.3 to 20 µm; resistance of the surface of the resin layer at 20°C is 1.0 to 10 Ω; and resistance after heating at 220°C is 200 to 600 Ω.
(3) A current collector having a resin layer on at least one side of a conductive substrate, wherein the resin layer comprises a fluorine-based resin and conductive particles; the resin layer has a thickness of 0.3 to 20 µm; resistance of the surface of the resin layer at 20°C is 1.8 to 9.7 Ω; and resistance after heating at 180°C is 209 to 532 Ω.

### BRIEF DESCRIPTION OF THE DRAWINGS

[FIG. 1] FIG. 1 is a cross-sectional view showing a structure of the current collector according to one embodiment of the present invention.
[FIG. 2] FIG. 2 is a cross-sectional view showing a structure of an electrode structure constructed by using the current collector according to one embodiment of the present invention.
[FIG. 3] FIG. 3 is an explanatory view showing the conductive particles contained in the resin layer according to one embodiment of the present invention.
[FIG. 4] FIG. 4 is an explanatory view showing the mechanism of the shut down function of the current collector according to one embodiment of the present invention (state before exhibition of the shut down function).
[FIG. 5] FIG. 5 is an explanatory view showing the mechanism of the shut down function of the current collector according to one embodiment of the present invention (state when the shut down function is exhibited).

### DESCRIPTION OF EMBODIMENTS

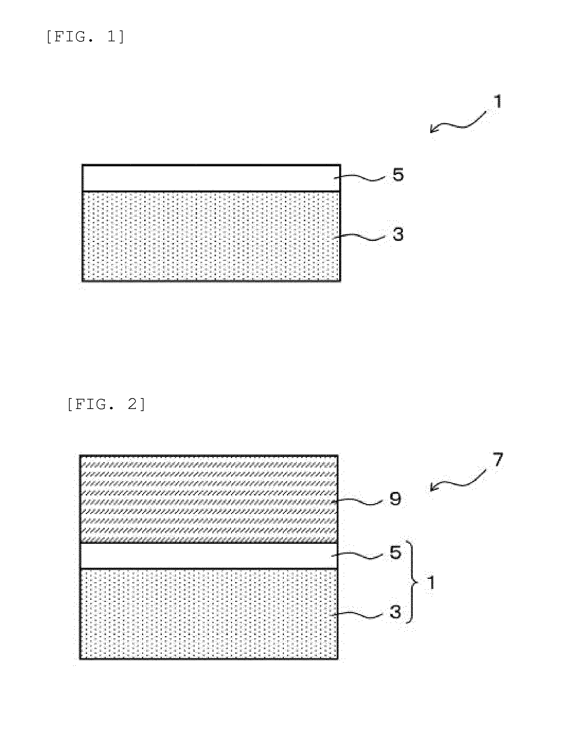

Hereinafter, a current collector according to one embodiment of the present invention will be described with reference to FIG. 1 to FIG. 5.

As shown in FIG. 1, the current collector 1 of the present invention is constructed by providing a resin layer 5 having conductive property (resin layer for current collector) on at least one side of the conductive substrate 3. Here, the resin layer 5 comprises a fluorine-based resin and conductive particles, and has a thickness of 0.3 to 20 µm. In addition, the current collector 1 satisfies at least one of the following characteristics (1) to (3). That is, the current collector 1 may satisfy one, two, or all of the three characteristics (1) to (3).
(1) Average particle diameter of the conductive particles is 0.5 to 25 µm, and a surface occupying ratio of the conductive particles at a surface of the resin layer is 10 to 50%.
(2) Resistance of the surface of the resin layer at 20°C is 1.0 to 10 Ω, and resistance after heating at 220°C is 200 to 600 Ω**.**
(3) Resistance of the surface of the resin layer at 20°C is 1.8 to 9.7 Ω, and resistance after heating at 180°C is 209 to 532 Ω.

In addition, as shown in FIG. 2, an active material layer or an electrode material layer 9 is formed on the resin layer 5 of the current collector 1 of the present invention. This allows to obtain the electrode structure 7 suitable for usage in non-aqueous electrolyte batteries such as lithium ion batteries, electrical double layer capacitors, or lithium ion capacitors.

Hereinafter, each of the components will be described in detail.

### (1) Conductive substrate

As the conductive substrate of the present invention, various types of metal foils for the usage in non-aqueous electrolyte batteries, electrical double layer capacitors, or lithium ion capacitors can be used. Specifically, various metal foils for positive electrodes and negative electrodes, such as foils of aluminum, aluminum alloy, copper, stainless steel, nickel and the like can be used for example. Among these, from the viewpoint of the balance between high electrical conductivity and cost, aluminum, aluminum alloy, and copper is preferable, and aluminum alloy is further preferable. There is no particular limitation with respect to the thickness of the conductive substrate, however, it is preferable that the thickness is 5 µm or more and 50 µm or less. When the thickness is less than 5 µm, the strength of the foil would be insufficient, and thus it becomes difficult to form the resin layer and the like. When the thickness exceeds 50 µm, the other components, particularly the active material layer or the electrode material layer need be thinned. In particular, when non-aqueous electrolyte batteries and electrical storage devices such as electrical double layer capacitors or lithium ion capacitors are being made, the amount of the active material layer in the battery need be lessened, thereby leading to cases where the capacity becomes insufficient.

### (2) Resin Layer

In the present invention, a resin layer added with conductive particles is formed on the conductive substrate. Regarding the usage as the positive electrode, it is preferable that the resin layer of the present invention is structured separately from the active material layer. As such, the adhesion between the conductive substrate and the active material layer can be improved. By using the current collectors of the present invention for non-aqueous electrolyte batteries, electrical storage device and the like, a shut down function with extremely high safety and superior high rate characteristics can be provided, enabling preferable usage as current collectors with superior safety.

It is necessary that the resin of the resin layer of the present invention is a fluorine-based resin. Here, the fluorine-based resin is a resin which inevitably contains fluorine resin as the main component of the resin. Such fluorine-based resin includes a resin where all of the resin component is a fluorine resin.

### <Fluorine-based Resin>

In the present invention, the fluorine-based resin is a resin containing a fluorine resin as the resin component, and may be a resin containing only fluorine resin or may be a resin containing a fluorine resin and another resin. The fluorine resin is a resin containing fluorine, for example fluorine resins such as polyvinylidene fluoride (PVDF), polytetrafluoro ethylene (PTFE), tetrafluoro ethylene-perfluoro alkyl vinyl ether copolymer (PFA), tetrafluoro ethylene-hexafluoro propylene copolymer (FEP), polychloro trifluoro ethylene (PCTFE), tetrafluoro ethylene-ethylene copolymer (ETFE), chloro trifluoro ethylene-ethylene copolymer (ECTFE), polyvinyl fluoride (PVF) and derivatives thereof; and fluorine copolymers obtained by copolymerizing fuluoro-olefines such as PCTFE and tetrafluoro ethylene with cyclohexyl vinyl ether or carboxylic acid vinyl ester. These fluorine resin may be used alone, or two or more types may be used in combination. In the present invention, polyvinylidene fluoride-based resin can be used preferably. Specifically, polyvinylidene fluoride (PVDF) and acrylic acid modified polyvinylidene fluoride (M-PVDF) are preferable since they can certainly provide both of the shut down function with extremely high safety and superior high rate characteristics regarding non-aqueous electrolyte batteries and electrical storage devices.

As the fluorine-based resin of the present invention, fluorine resin can be used by 100 mass% when the entire resin component is taken as 100 mass%. Here, the fluorine resin can be used in combination with other resin components. In such cases, the fluorine resin is usually contained by at least 40 mass% or more, preferably 50 mass% or more, with respect to the entire resin component. When the formulation amount of the fluorine resin is too small, it becomes difficult to control the conductive particles (described later), and thus it becomes difficult to certainly achieve both of the shut down function and the superior high rate characteristics. Specific examples of the ratio of the fluorine resin are, 40, 50, 60, 70, 80, 90, and 100 mass%, and may be in the range of two values selected from the values exemplified herein.

The weight average molecular weight of the fluorine-based resin is, for example, 3x10⁴ to 100x10⁴. Specific examples of the weight average molecular weight are 3x10⁴, 4x10⁴, 5x10⁴, 6x10⁴, 7x10⁴, 8x10⁴, 9x10⁴, 10x10⁴, 15x10⁴, 20x10⁴, 30x10⁴, 40x10⁴, 50x10⁴, 60x10⁴, 70x10⁴, 80x10⁴, 90x10⁴, and 100x10⁴, and may be in the range of two values selected from the values exemplified herein. Here, the weight average molecular weight means the one measured by GPC (gel permeation chromatography).

It is preferable for the fluorine-based resin to have a carboxyl group or a carboxylic acid ester group (hereinafter referred to as "ester group"). By such, the adhesion property between the substrate and the resin layer can be improved. In addition, when the fluorine-based resin has an ester group, the adhesion property between the fluorine-based resin and the conductive particles (example: carbon particles) can be improved.

The way in which the fluorine-based resin has the carboxyl group (-COOH) or the ester group (-COOR, wherein R is for example a hydrocarbon having 1 to 5 carbon atoms) is not particularly limited. For example, the fluorine resin may be a copolymer of a monomer having the carboxyl group or the ester group and a monomer containing fluorine; or the fluorine-based resin may be a mixture of the fluorine resin and a resin having the carboxyl group or the ester group; or the fluorine resin may be modified with a compound having the carboxyl group or the ester group. There is no limitation with respect to the method for modifying the fluorine resin. Here, in one example, as described in JP 2002-304997A, the fluorine resin may be subjected to radiation to detach a fluorine atom, thereby generating a radical. Then, the fluorine resin is mixed with a compound having the carboxyl group or the ester group to obtain a graft polymer of fluorine resin and the compound having the carboxyl group or the ester group. The ratio of the number of the carboxyl group or the ester group against the number of fluorine atom contained in the fluorine-based resin is not particularly limited. Here, the ratio is 0.1 to 5, preferably 0.5 to 2. Examples of specific values of the ratio is, for example, 0.1, 0.2, 0.5, 1, 1.5, 2, 3, 4, and 5, and may be in the range of two values selected from the values exemplified herein. Examples of the monomer (or compound) having the carboxyl group or the ester group includes acrylic acid, methacrylic acid, and esters thereof (example: methyl methacrylate).

It is preferable that the thickness of the resin layer 5 of the present invention is 0.3 to 20 µm. When the thickness is less than 0.3 µm, the reduction in the resistance would be insufficient at the condition of over-heating, thereby causing cases where the shut down function is not realized. When the thickness exceeds 20 µm, the resistance at normal conditions would be high, thereby leading to decrease in the performance at high rate. The thickness of the resin layer 5 is, for example, 0.3, 0.5, 1, 2, 5, 10, 15, or 20 µm, and may be in the range of two values selected from the values exemplified herein.

### <Conductive Particles>

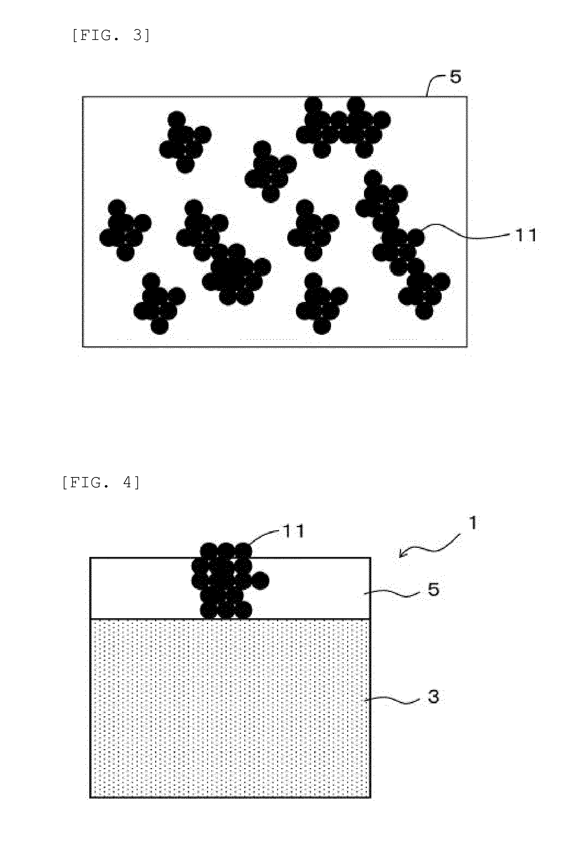

The resin layer 5 of the present invention has high insulation property, and thus the conductive particles 11 need be formulated in order to provide electron conductivity (refer to FIG. 3 and FIG. 4). As the conductive particles 11 used in the present invention, known carbon powders, metal powders and the like can be used. Among these, carbon powders are preferable. Examples of such carbon powders include acetylene black, Ketjen black, furnace black, carbon nanotube, and various graphite particles.

The conductive particles 11 exist in the resin layer 5 in the state of secondary aggregates of particles (refer to FIG. 3 and FIG. 4). In the present invention, the average particle diameter of the conductive particles 11 is preferably 0.5 to 25 µm. When the average particle diameter is smaller than 0.5 µm, sufficient battery performance cannot be obtained. When the average particle diameter exceeds 25 µm, there are cases where sufficient shut down effect cannot be realized. The average particle diameter of the conductive particles 11 can be measured by element mapping using EMPA (electron probe micro analyzer) or FE-EPMA (field emission electron probe micro analyzer). When the mapping of fluorine is carried out from the resin layer surface side, no fluorine is detected at the portion where the conductive particles exist. Therefore, by measuring the diameter of the portion where fluorine is not detected, the average particle diameter of the primary particle or the secondary particle of the conductive particles 11 can be measured. When the portion where fluorine is not detected is not circular, the particle diameter is obtained as the average of the maximum and minimum diameter measured. Specific examples of the average particle diameter of the conductive particles are, 0.5, 1, 2, 5, 10, 15, 20, and 25 µm, and may be in the range of two values selected from the values exemplified herein.

In addition, in the present invention, it is recommended that the surface occupying ratio of the conductive particles 11 at the surface of the resin layer 5 is 10 to 50%. When the ratio is lower than 10%, the resistance at normal conditions would not be low enough, thereby leading to problems such as decrease in capacity at high rate. When the ratio exceeds 50%, there are cases where the shut down function cannot be realized when the temperature rises. As shown in the plan view of FIG. 3, the surface occupying ratio of the conductive particles 11 refers to the ratio of the area where the conductive particles 11 occupy (area of black portion) when the resin layer 5 is observed from its surface side (opposite side of substrate 3).

FIG. 4 is a cross-sectional view showing one example of the conductive particles 11 existing in the resin layer 5. In resin layer 5, many conductive particles 11 exist. Here, a certain ratio of the conductive particles 11 have a particle diameter larger than the layer thickness of the resin layer 5. Therefore, as shown in FIG. 4, such conductive particle come in contact with the conductive substrate 3, providing adequate electrical conductivity to the resin layer 5.

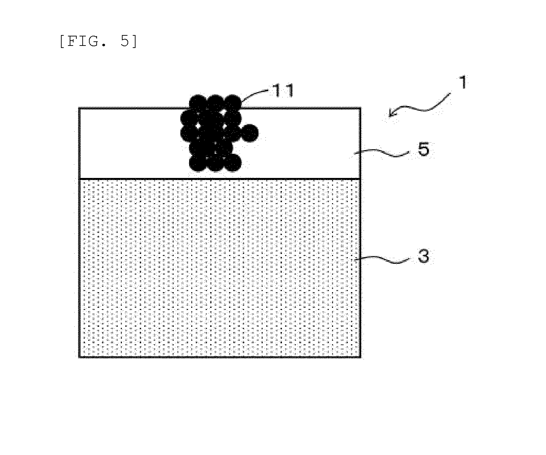

As shown in FIG. 4, the conductive particles 11 are in contact with the conductive substrate 3 at normal conditions. When the temperature is excessively raised due to malfunction or overcharge, the fluorine-based resin of the resin layer 5 expands in accordance with the temperature. Since the adhesion between the conductive particles 11 and the conductive substrate 3 is weak, the expansion of the fluorine-based resin allows the conductive particles 11 to be raised away from the conductive substrate 3 (refer to FIG. 5). As the conductive particles 11 goes apart from the conductive substrate 3, the current becomes more difficult to flow, and when the flow of the current is completely terminated, the shut down function is realized. Here, among the conductive particles 11, there are ones that are difficult to apart from the substrate even when the fluorine-based resin is expanded. Therefore, if the surface occupying ratio of the conductive particles 11 is too high, the electrical resistance of the resin layer 5 after the expansion would not be high enough, thereby resulting in cases where the shut down function cannot be realized appropriately. Accordingly, it is preferable that an upper limit of the surface occupying ratio of the conductive particles 11 is provided. In addition, when the surface occupying ratio of the conductive particles 11 is too low, there are cases where the electrical resistance of the resin layer 5 is not low enough at normal conditions. Here, in the present invention, in order to achieve sufficiently low electrical resistance value at normal conditions and to realize the shut down function appropriately, it is recommended that the surface occupying ratio of the conductive particles 11 is 10 to 50%, preferably 20 to 40%.

The amount of the conductive particles 11 being added is not particularly limited. Here, it is preferably 20 to 100 mass parts, more preferably 25 to 70 parts by mass, and further more preferably 30 to 50 parts by mass, with respect to 100 parts by mass of the resin component of the resin layer 5. When it is less than 20 parts by mass, the volume resistivity of the resin layer 5 would become high, and thus there are cases where electrical conductivity required as the current collectors cannot be obtained. When the amount exceeds 100 parts by mass, the adhesion between the resin layer 5 and the conductive substrate 3 would decrease, thereby causing cases where the active material layer peels off due to the expansion and shrinking of the active material caused by the charge and discharge of the battery.

The dispersion state of the conductive particles of the present invention is achieved by the following dispersing methods for example. Conventionally, dispersion of the conductive materials have been conducted mainly focusing on dispersing the material finely and uniformly. In the present invention, it is preferable to disperse the material with adequate aggregation. Method for dispersing the material in such manner will be described hereinafter. As the disperser, Disper, a planetary mixer, a ball mill and the like can be used. Hereinafter, the method using Disper will be described.

The dispersion state of the conductive particles of the present invention is achieved by first preliminarily dispersing the conductive particles in a fluorine-based resin solution, and then finally dispersing the particles. In the preliminary dispersion, the conductive particles are added by 30 to 120 parts by mass with respect to 100 parts by mass of the resin solids of the fluorine-based resin solution. Then, the mixture is agitated for 5 to 60 minutes at the rotation number of 1000 to 5000 rpm to prepare the preliminary dispersion coating. When the amount of the conductive particles being added is less than 30 parts by mass, the particle diameter after the final dispersion tends to become too small, and when the amount of addition exceeds 120 parts by mass, the particle diameter after the final dispersion tends to become too large. When the rotation number during the preliminary dispersion is lower than 1000 rpm, the particle diameter after the final dispersion tends to become too large, and when the rotation number is higher than 5000 rpm, the particle diameter after the final dispersion tends to become too small. When the agitation time for the preliminary dispersion is shorter than 5 minutes, the particle diameter after the final dispersion tends to become too large, and when the agitation time for the preliminary dispersion is longer than 60 minutes, the particle diameter after the final dispersion tends to become too small.

Subsequently, at the final dispersion, the fluorine-based resin solution is added to the preliminary dispersion paste, so that the amount of the conductive particles would be 20 to 100 parts by mass with respect to 100 parts by mass of the resin solids. The final dispersion is carried out for 10 to 120 minutes at the rotation number of 2000 to 7000 rpm. When the rotation number during the final dispersion is lower than 2000 rpm, the particle diameter tends to become too large, and when the rotation number is higher than 7000 rpm, the particle diameter tends to become too small. When the agitation time for the final dispersion is shorter than 10 minutes, the particle diameter tends to become too large, and when the agitation time for the final dispersion is longer than 120 minutes, the particle diameter tends to become too small.

In addition, the ratio of the thickness of the resin layer 5 with respect to the average particle diameter of the conductive particles 11 (thickness of the resin layer (µm)/average particle diameter of the conductive particles (µm)) is preferably 0.2 to 5, more preferably 0.5 to 2, and further more preferably 0.8 to 1.2. When such value is too large, the electrical conductivity of the resin layer 5 tends to become insufficient, and when such value is too small, sufficient shut down function cannot be realized. Specific examples of such value include 0.2, 0.5, 0.8, 1, 1.2, 1.5, 2, 3, 4, and 5, and may be in the range of two values selected from the values exemplified herein.

In the present invention, the resistance at the surface of the resin layer is preferably (1) 1.0 to 10 Ω at 20°C and 200 to 600 Ω after heating at 220°C, and or (2) 1.8 to 9.7 Ω at 20°C and 209 to 532 Ω after heating at 180°C. Such difference in the resistance is required in order to achieve both of the shut down function and the high rate characteristics. Here, the resistance of the surface can be measured by a known measuring method. For example, the resistance can be measured by the two-terminal method using "Loresta" available from Mitsubishi Chemical Analytech Co., Ltd. Here, what is meant by after heating is a condition reached after the current collector is heated at 220°C or 180°C for 1 hour and then allowed to stand under room temperature until the temperature of the current collector becomes constant. The resistance can be measured by known methods, regarding the present invention. For example, when the resistance for a case of 220°C or 180°C is measured, the current collector to be measured is placed in an air furnace at 220°C or 180°C, and then the current collector is taken out of the furnace after 1 hour. The current collector is allowed to stand until it reaches room temperature, and then the measurement is carried out. Such method is adopted for the present invention since the resistance value of the current collectors hardly changes when they are cooled after heating.

The manufacturing method of the current collectors of the present invention is not particularly limited, and the resin layer is formed on the conductive substrate by a known method. Here, it is effective to provide a pretreatment to the conductive substrate before forming the resin layer, in order to improve adhesion property. In particular, when a metal foil manufactured by rolling is used, residual rolling oils and wear powders may be found on the surface of the metal foils, which may affect the adhesion with the resin layer. In such cases, the rolling oils and the wear powders can be removed by degreasing, thereby improving the adhesion with the resin layer. In addition, when a dry-activation treatment such as corona discharge treatment is provided before forming the resin layer, the adhesion with the resin layer can be improved.

The method for forming the resin layer is not particularly limited. Here, it is preferable that a paste and the like prepared by adjusting the addition amount and the average particle diameter of the conductive particles in a manner described above is applied onto the conductive substrate, followed by baking. When coating, a roll coater, a gravure coater, a slit dye coater and the like can be used, and is not limited to these. The temperature for baking is preferably 90 to 130°C (as the final temperature of the conductive substrate), and the baking time is preferably 5 to 120 seconds.

### Electrode Structure

By forming an active material layer or an electrode material layer on at least one side of the current collector of the present invention, the electrode structure of the present invention can be obtained. The electrode structure for the electrical storage device formed with the electrode material layer will be described later. First, in the case of an electrode structure with an active material layer formed thereon, this electrode structure can be used with a separator, non-aqueous electrolyte solution and the like to manufacture an electrode structure (including parts for batteries) for a non-aqueous electrolyte battery, such as a lithium ion secondary battery. In the electrode structure for the non-aqueous electrolyte battery and the non-aqueous electrolyte battery of the present invention, conventional parts for non-aqueous electrolyte battery can be used for the parts other than the current collector.

Here, in the present invention, the active material layer formed as the electrode structure may be the ones conventionally proposed for the non-aqueous electrolyte battery. For example, positive electrode structure of the present invention can be obtained by coating the current collector of the present invention which uses aluminum with a paste, followed by drying. Here, the paste for the positive electrode structure is obtained by using LiCoO₂ LiMnO₂, LiNiO₂ and the like as an active material and using carbon black such as acetylene black and the like as conductive particles, and dispersing the active material and the conductive material in PVDF as a binder or in the water dispersion type PTFE.

A negative electrode structure of the present invention can be obtained by coating paste as an active material layer forming material, followed by drying. The current collector for the negative electrode of the present invention uses copper as the conductive substrate. Here, the paste for the negative electrode structure is obtained by using graphite, mesocarbon microbead and the like as the active material, dispersing the active material in CMC as a thickening agent, and then mixing the resulting dispersion with SBR as a binder.

### Non-aqueous Electrolyte Battery

The present invention may be a non-aqueous electrolyte battery. In such case, there is no particular limitation except that the current collector of the present invention is used. For example, the non-aqueous electrolyte battery of the present invention can be obtained by sandwiching a separator immersed in an electrolyte solution for non-aqueous electrolyte battery containing non-aqueous electrolyte, in between the afore-mentioned positive electrode structure and the negative electrode structure having the current collector of the present invention as a structure component. As the non-aqueous electrolyte and the separator, the conventional ones for non-aqueous electrolyte battery can be used. The electrolyte solution can use carbonates, lactones or the like as a solvent. For example, LiPF₆ or LiBF₄ as an electrolyte can be dissolved in a mixture of EC (ethylene carbonate) and EMC (ethyl methyl carbonate) and used. As the separator, a membrane made of polyolefin having microporous can be used for example.

### Electrical Storage Device (Electrical Double Layer Capacitor, Lithium Ion Capacitor and the Like)

In general, the electrical double layer capacitor and the like are safer than the secondary battery, however, from the viewpoint of improving high rate characteristics, the current collectors of the present invention can be applied. Regarding the electrical double layer capacitor, lithium ion capacitor and the like of the present invention , the current collector of the present invention can be applied to an electrical storage device of an electrical double layer capacitor, lithium ion capacitor and the like, which require charge and discharge with a large current density at high speed. The electrode structure for the electrical storage device of the present invention can be obtained by forming an electrode material layer on the current collector of the present invention. The electrical storage device for the electrical double layer capacitor, lithium ion capacitor and the like can be manufactured with the obtained electrode structure, a separator, and an electrolyte solution. In the electrode structure and the electrical storage device of the present invention, conventional parts for the electrical double layer capacitor and lithium ion capacitor can be used for the parts other than the current collector.

The electrode material layers of the positive electrode and the negative electrode can both be structured with an electrode material, conductive particles, and a binder. In the present invention, the electrical storage device can be obtained by first forming the afore-mentioned electrode material layer onto at least one side of the current collector of the present invention to give the electrode structure. Here, as the electrode material, the ones conventionally used as the electrode material for the electrical double layer capacitor or for the lithium ion capacitor, can be used. For example, carbon powders such as activated charcoal and graphite, and carbon fibers can be used. As the conductive particles, carbon blacks such as acetylene black and the like can be used. As the binder, PVDF (polyvinylidene fluoride), SBR (styrene butadiene rubber), and water dispersion type PTFE can be used for example. In addition, the electrical storage device of the present invention can construct an electrical double layer capacitor or a lithium ion capacitor by fixing a separator in between the electrode structures of the present invention, and then immersing the separator in the electrolyte solution. As the separator, a membrane made of polyolefin having microporous, a non-woven fabric for an electrical double layer capacitor, and the like can be used for example. Regarding the electrolyte solution, carbonates and lactones can be used as the solvent for example, and tetraethylammonium salt, triethylmethylammonium salt and the like can be used as the electrolyte, and hexafluorophosphate, tetrafluoroborate and the like can be used as the negative ion. Lithium ion capacitor is structured by combining a negative electrode of a lithium ion battery and a positive electrode of an electrode double layer capacitor. There is no particular limitation with respect to the manufacturing method, except that the current collector of the present invention is used.

### EXAMPLES

Hereinafter, the present invention will be described specifically with reference to Examples and Comparative Examples of the present invention, however, the present invention shall not be limited to the following Examples.

### <Preparation of Current Collectors>

The fluorine-based resin was prepared as a coating by dissolving the various resins shown in Table 1 in NMP (N-methyl-2-pyrrolidone) to give a resin solution, followed by the preliminary dispersion and the final dispersion using the Disper. The amount of the conductive particles added at the preliminary dispersion is provided by parts by mass of the added amount of the particles with respect to 100 parts by mass of the resin solids. In the final dispersion, agitation was carried out after adding the resin solution so that the formulation amount of the conductive particles with respect to 100 parts by mass of the resin solids would be the value shown in Table 1. A water-based emulsion coating of a copolymer obtained by copolymerizing methyl acrylate / ethyl methacrylate / acryl amide by the ratio of 10/10/80 was used as the acryl resin. The coating was applied on both surfaces of the aluminum foil with a thickness of 20 µm (JIS A1085) with the conditions provided in Table 1 to give the current collectors. The temperatures shown in Table 1 are all final temperatures of the substrates.

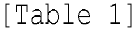

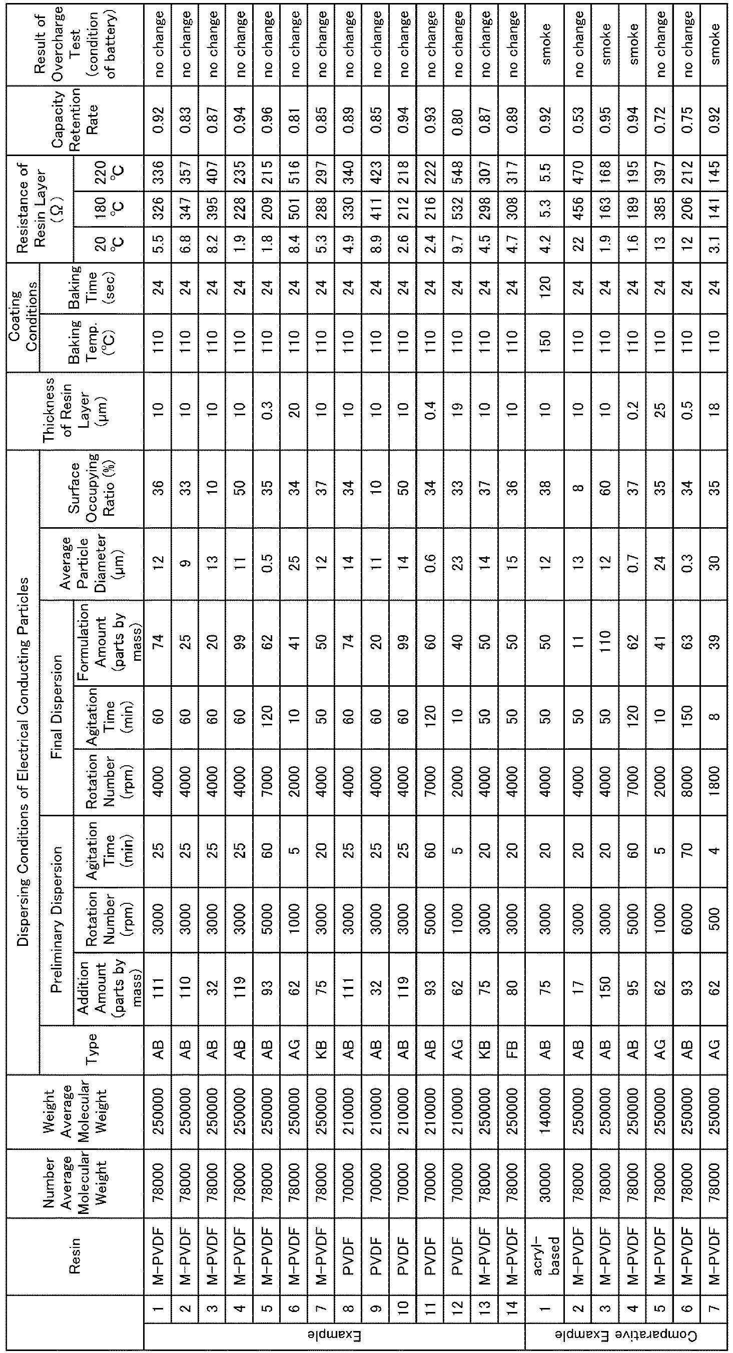

In the column of the resin in Table 1, PVDF means polyvinylidene fluoride, and M-PVDF means acrylic acid modified polyvinylidene fluoride. In the column of the type of the conductive particles, AB means acetylene black, KB means Ketjen black, FB means furnace black, and AG means earthy graphite (amorphous graphite). The formulation amount of the conductive particles is shown as a value with respect to 100 parts by mass of the resin solids. The "average particle diameter" shows the average particle diameter of the conductive particles.

### <Average Particle Diameter of Conductive Particles>

The average particle diameter of the conductive particles was obtained in the following manner. First, the surface of the resin layer was subjected to fluorine mapping with FE-EPMA, and the portion where fluorine was not detected (in case of an acryl resin, the portion where oxygen was not detected) was taken as the conductive particle. Then, average was calculated by measuring particle diameters (when the particle was not a circle, average of the maximum diameter and the minimum diameter) of ten particles.

### <Method for Measuring Surface Occupying Ratio of Conductive Particles>

The surface occupying ratio of the conductive particles was obtained in the following manner. First, the surface of the resin layer was subjected to fluorine mapping with FE-EPMA, and the portion where fluorine was not detected (in case of an acryl resin, the portion where oxygen was not detected) was taken as the conductive particle. Then, the surface occupying ratio was calculated from the area occupied by the conductive particles in a 500µm square.

### <Measurement of Thickness of Resin Layer>

The thickness of the resin layer was obtained in the following manner. The cross section of the entire resin was observed using FE-SEM (field emission-type scanning electron microscope). The thickness of the resin layer was measured at portions where the particle diameter of the conductive particle does not exceed 1/3 of the film thickness.

### <Electrical Resistance of Resin Layer>

Electrical resistance of the resin layer was measured for 20°C, 180°C and 220°C by the two-terminal method using "Loresta" available from Mitsubishi Chemical Analytech Co., Ltd. The one measured for 20°C was obtained in a room kept at 20°C. The ones measured for 180°C and 220°C were obtained in the following manner. First, the current collectors were placed in an air furnace kept at such temperature respectively, and then after 1 hour, the current collectors were taken out of the furnace. The current collectors were allowed to stand under room temperature of 20°C until the temperature of the current collectors became stable, and then the measurement was carried out.

### <Capacity Retention Rate>

### (1) Preparation of Battery

(Positive Electrode) The active material paste (LiMn₂O₄/AB/PVDF=89.5/5/5.5, NMP (N-methyl-2-pyrrolidone) as solvent) was applied onto the current collector having the resin layer prepared by the afore-mentioned method, and was then dried. Then, the active material layer with 60 µm thickness was formed by pressing.
(Negative Electrode) The active material paste (MCMB (mesocarbon microbeads)/AB/PVDF=93/2/5, NMP as solvent) was applied onto a copper foil with 10 µm thickness, and was then dried. Then, the active material layer with 40 µm thickness was formed by pressing.

### (Preparation of Cylindrical Lithium Ion Battery (ø18mm x 65 mm length in the axis direction))

The positive electrode, negative electrode, and electrolyte solution (1M LiPF₆, EC (ethylene carbonate)/MEC (methylethyl carbonate)=3/7), and separator (micro porous polyethylene film with 25 µm thickness) were wound, and a lead was welded to each of the battery poles. Then, the battery was cased.

### (2) Measurement of Capacity Retention Rate (High Rate Characteristics)

The battery thus obtained was charged to 4.2V at 0.25 mA/cm² by constant current and constant voltage. Then, the battery was discharged by constant current at 0.25 mA/cm² and 5 mA/cm². Capacity retention rate was calculated from each of the discharge capacity by the following equation of "Capacity retention rate = (discharge capacity at 5 mA/cm²)/(discharge capacity at 0.25 mA/cm²)". If the capacity retention rate is 0.8 or higher, usage under high rate is possible.

### <Overcharge Test>

The afore-mentioned battery was charged to 4.2V at 1.5 mA/cm² by constant current and constant voltage. Then, the fully charged battery was further charged up to 250% at 5A. The conditions of the battery were investigated.

All of the Examples of the present invention showed no abnormality when overcharged. This indicates that the heat generated by overcharge resulted in sufficient increase in the resistance of the resin layer, thereby decreasing the current to a safe region. In addition, all of the Examples of the present invention had high capacity retention rate, and can be sufficiently used at high rate. On the other hand, Comparative Example 1, Comparative Example 3, Comparative Example 4 and Comparative Example 7 suffered generation of smoke from the batteries. It is assumed that the resistance of the resin layer does not decrease sufficiently even when heat is generated by overcharge, thereby leading to decomposition of the electrolyte solution and generation of smoke. Further, Comparative Example 2, Comparative Example 5 and Comparative 6 cannot be applied to HEV and the like which require superior high rate characteristics.

### EXPLANATION OF SYMBOLS

1 : current collector
3 : conductive substrate
5 : resin layer(resin layer for current collector)
7 : electrode structure
9 : active material layer or electrode material layer

## Claims

1. A current collector having a resin layer on at least one side of a conductive substrate, wherein:
the resin layer comprises a fluorine-based resin and conductive particles;
the resin layer has a thickness of 0.3 to 20 µm; and
the current collector satisfies at least one of the following characteristics of the items (1) to (3):
(1) average particle diameter of the conductive particles is 0.5 to 25 µm, and a surface occupying ratio of the conductive particles at a surface of the resin layer is 10 to 50%,
(2) resistance of the surface of the resin layer at 20°C is 1.0 to 10 Ω, and resistance after heating at 220°C is 200 to 600 Ω, and
(3) resistance of the surface of the resin layer at 20°C is 1.8 to 9.7 Ω, and resistance after heating at 180°C is 209 to 532 Ω.

2. The current collector of Claim 1, satisfying the characteristics of the item (1).

3. The current collector of Claim 1 or 2, satisfying the characteristics of the (2).

4. The current collector of any one of Claims 1 to 3, satisfying the characteristics of the item (3).

5. A current collector having a resin layer on at least one side of a conductive substrate, wherein:
the resin layer comprises a fluorine-based resin and conductive particles having an average particle diameter of 0.5 to 25 µm;
the resin layer has a thickness of 0.3 to 20 µm; and
a surface occupying ratio of the conductive particles at a surface of the resin layer is 10 to 50%.

6. The current collector of any one of Claims 1 to 5, wherein the fluorine-based resin has a carboxyl group or a carboxylic acid ester group.

7. The current collector of any one of Claims 1 to 6, wherein the fluorine-based resin comprises polyvinylidene fluoride.

8. An electrode structure comprising:
a current collector of any one of Claims 1 to 7; and
an active material layer or an electrode material layer provided on the resin layer of the current collector.

9. A non-aqueous electrolyte battery or an electrical storage device provided with the electrode structure of any one of Claims 1 to 8.

10. A non-aqueous electrolyte battery or an electrical storage device provided with the electrode structure of Claim 9 and having a capacity retention rate of 80% or higher.
